(19) **Europäisches Patentamt / European Patent Office / Office européen des brevets**

(11) **EP 4 462 629 B1**

(12) **EUROPÄISCHE PATENTSCHRIFT**

(45) Veröffentlichungstag und Bekanntmachung des Hinweises auf die Patenterteilung:
**16.04.2025 Patentblatt 2025/16**

(21) Anmeldenummer: **23173056.5**

(22) Anmeldetag: **12.05.2023**

(51) Internationale Patentklassifikation (IPC):
*H02J 3/26* <sup>(2006.01)</sup>   *H02J 3/32* <sup>(2006.01)</sup>
*H02M 7/797* <sup>(2006.01)</sup>   *H02M 1/00* <sup>(2006.01)</sup>
*H02M 7/49* <sup>(2007.01)</sup>

(52) Gemeinsame Patentklassifikation (CPC):
**H02J 3/32; H02J 3/26; H02M 1/0003; H02M 7/49; H02M 7/797**

(54) **VERFAHREN ZUR ERZEUGUNG EINES MEHRPHASENWECHSELSTROMS, SCHALTUNGSANORDNUNG UND ENERGIEVERSORGUNGSSYSTEM**

METHOD FOR PRODUCING A MULTI-PHASE ALTERNATING CURRENT, CIRCUIT ARRANGEMENT AND ENERGY SUPPLY SYSTEM

PROCÉDÉ DE PRODUCTION D'UN COURANT ALTERNATIF POLYPHASÉ, CIRCUIT ET SYSTÈME D'ALIMENTATION EN ÉNERGIE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**13.11.2024 Patentblatt 2024/46**

(73) Patentinhaber: **SAX Power GmbH**
**89155 Erbach (DE)**

(72) Erfinder: **Xie, Anya**
**89079 Ulm (DE)**

(74) Vertreter: **Lorenz, Matthias**
**Lorenz & Kollegen**
**Patentanwälte Partnerschaftsgesellschaft mbB**
**Alte Ulmer Straße 2**
**89522 Heidenheim (DE)**

(56) Entgegenhaltungen:
**WO-A1-2015/188877    WO-A1-2019/081503**
**WO-A1-2022/270818    AT-B- 346 422**
**CN-A- 114 447 970**

**Beschreibung**

Die Erfindung betrifft ein Verfahren zur Erzeugung eines Mehrphasenwechselstroms, insbesondere eines Dreiphasenwechselstroms, durch Verschalten einer Mehrzahl von Gleichspannungsquellen. Die Erfindung betrifft außerdem ein Computerprogramm zur Durchführung des Verfahrens.

Die Erfindung betrifft auch eine Schaltungsanordnung zur Erzeugung eines Mehrphasenwechselstroms, insbesondere eines Dreiphasenwechselstroms, aus einer Mehrzahl von Gleichspannungsquellen, aufweisend einen konfigurierbaren Gleichspannungsstrang für jede Phase des Mehrphasenwechselstroms, wobei jeder konfigurierbare Gleichspannungsstrang eingerichtet ist, eine Mehrzahl mit dem konfigurierbaren Gleichspannungsstrang verbindbare Gleichspannungsquellen in einer konfigurierbaren Reihenschaltung miteinander zu verschalten.

Die Erfindung betrifft weiter ein Energieversorgungssystem, aufweisend eine Schaltungsanordnung zur Erzeugung eines Mehrphasenwechselstroms und mehrere Gleichspannungsquellen.

In Energieversorgungssystemen kommen mitunter Batteriespeichersysteme zum Einsatz, wie beispielsweise Photovoltaik-Heimspeicher ("Solarbatterien") zur Speicherung von Ertragsüberschüssen von Photovoltaikanlagen oder Antriebsbatterien ("Hochvoltspeicher") zur Versorgung der Elektromotoren bzw. Antriebsaggregate von Elektrofahrzeugen. Solche Batteriespeichersysteme benötigen mitunter Batteriespannungen von mehreren hundert Volt. Da die Zellspannung einer einzelnen Batteriezelle jedoch lediglich einige Volt beträgt (z. B. 3,7 V bei einer Lithium-Ionen-Batterie), müssen viele einzelne Batteriezellen zu einem Batteriepack bzw. Akkupack (nachfolgend auch vereinfacht als "Batterie" bezeichnet) in Reihe geschaltet werden.

Fabrikationsbedingt weist jede Batteriezelle einer Batterie Unterschiede in ihren Eigenschaften auf, wie zum Beispiel der Zellkapazität, der Selbstentladungsrate und der Temperaturcharakteristik. Im Laufe der Zeit werden diese Differenzen durch Alterungseffekte zusätzlich verstärkt. Dies hat zur Folge, dass beim Ladevorgang einige Batteriezellen ihren maximalen Ladungsstand noch nicht erreicht haben, während andere Batteriezellen bereits vollständig aufgeladen sind. Das Überladen der bereits vollständig geladenen Batteriezellen kann schließlich zu deren Schädigung bis hin zu deren Zerstörung führen. Um dies zu verhindern, muss der Ladevorgang vorzeitlich abgebrochen werden.

Beim Entladevorgang verhält es sich ähnlich. Während einige Batteriezellen bereits vollkommen entladen sind, speichern andere Batteriezellen mitunter noch ausreichend Energie, um beispielsweise ein Elektrofahrzeug weiter anzutreiben. Beim Beispiel des Elektrofahrzeugs müsste schließlich der Fahrbetrieb vorzeitig abgebrochen werden, da ansonsten die schwächeren Batteriezellen tiefentladen werden, was - wie bei der Überladung - zu deren Zerstörung führen kann.

Um einen reibungslosen Lade- und Entladevorgang zu gewährleisten, werden Batteriemanagementsysteme ("BMS") für den Ladungsausgleich zwischen den einzelnen Batteriezellen eingesetzt, vgl. J. Qi, D. Lu., "Review of Battery Cell Balancing Techniques", Australasian Universities Power Engineering Conference, AUPEC 2014, Curtin University, Perth, Australia, 28 Sept. 1 Oct. 2014.

Das zum Anmeldezeitpunkt verbreitetste Verfahren ist der so genannte passive Ladungsausgleich. Dabei werden bereits vollständig aufgeladene Batteriezellen über einen Widerstand wieder entladen, während die anderen Batteriezellen weiter aufgeladen werden. Ein offensichtlicher Nachteil dieses Verfahrens ist, dass hierbei wertvolle elektrische Energie verloren geht und dass das Verfahren zudem keine Lösung für den Entladevorgang bietet.

Die Probleme des passiven Ladungsausgleichs können mithilfe eines aktiven Ladungsausgleichs behoben werden. Bei dieser Technik sind jedoch aufwendige Schaltungen mit leistungselektronischen Bauteilen und komplizierter Steuerung erforderlich. Für induktive Ausgleichschaltungen können beispielsweise zwei Metall-Oxid-Halbleiter-Feldeffekttransistoren ("Metal-Oxide-Semiconductor Field-Effect Transistor", MOSFET) pro Batteriezelle erforderlich sein; für kapazitive Ausgleichschaltungen in der Regel sogar vier. Weiter sind Drosseln, Transformatoren oder Kondensatoren als Energiespeicher notwendig.

Zur Erzeugung von Drehspannungen, z. B. für die elektrischen Maschinen bzw. Elektromotoren in einem Elektrofahrzeug, werden häufig selbstgeführte Wechselrichter eingesetzt. In der Regel besteht ein solcher Wechselrichter aus sechs leistungselektronischen Ventilen, die zu einer Drehstrombrücke zusammengeschaltet sind. Bei diesem "Zweipunkt-Wechselrichter" werden die sinusförmigen Wechselspannungen aus pulsförmigen Spannungen mit drei Spannungslevein (0, $\pm U_{DC}$) erzeugt. Die Höhe der Spannungspulse ist von der Batteriespannung $U_{DC}$ abhängig und damit konstant. Um Wechselspannungen zu generieren, kann als Stellglied die Zeitdauer der Spannungspulse variiert werden. Sie wird in der Regel mit dem Verfahren der Pulsweitenmodulation (PWM) berechnet. In diesem Fall finden sich in den Wechselspannungen jedoch hohe Störspannungen in den überlagerten Frequenzen. Um die Spannungsoberschwingungen zu reduzieren ist es bekannt, die Taktfrequenzen des Wechselrichters zu erhöhen. In der Regel liegen die Taktfrequenzen eines modernen Umrichters daher im Bereich mehrerer kHz bis zu 100 kHz. Allerdings steigen die Schaltverluste der Wechselrichter proportional zu deren Taktfrequenz.

Um diese Probleme zu umgehen, kann ein modularer Wechselrichter eingesetzt werden, wie beispielsweise in der DE 10 2011 004 248 A1 vorgeschlagen. Bei dieser Technik werden die einzelnen Batteriezellen nicht direkt, sondern über leistungselektronische H-Brückenschaltungen in Reihe geschaltet, um die Anzahl Spannungsstufen zu erhöhen. Auf diese Weise können bei vorgegebener Spannungsqualität die Taktfrequenzen und somit die Schaltverluste des Wechselrichters reduziert werden. Die einphasige sinusförmige Ausgangsspannung wird hier also nicht durch pulsförmige, sondern durch kleinstufige, treppenförmige Spannungen erzeugt. Bei einem derartigen "Multi-Level-Wechselrichter" entspricht die Höhe der kleinsten Spannungsstufe dabei in der Regel der Zellspannung der eingesetzten Batterie (z. B. 3,7 V).

Da die einzelnen Batteriezellen jeweils über eine separate H-Brücke geschaltet werden können, ist ein Ladungsausgleich der Batteriezellen möglich. Beim Ausfall einzelner Batteriezellen kann der Wechselrichter mit den "gesunden" Zellen sicher weiterbetrieben werden. Defekte Batteriezellen können ausgeschaltet und überbrückt werden und sind daher sicher auswechselbar. Die Verfügbarkeit ist dadurch deutlich höher als bei einer direkten Reihenschaltung der Batteriezellen.

Die beschriebene Schaltung stellt im Grunde eine Kombination eines Multi-Level-Wechselrichters, eines aktiven Ladungsausgleichs und eines verteilten Batteriemanagements dar. Vorteilhaft für die Sicherheit ist außerdem, dass nur eine Batteriezelle bei einer Störung in der Schaltung kurzgeschlossen werden kann. Der Fehlerstrom und die dabei freigesetzte Energie sind deutlich geringer als bei einer konventionellen Reihenschaltung. Außerdem liegt nach dem Ausschalten des Wechselrichters nur die Spannung einer einzelnen Batteriezelle vor. Dies erleichtert die Wartungsarbeit erheblich. Es können Batteriezellen unterschiedlichen Alters und unterschiedlichen Typs im selben Batterieblock eingesetzt werden. Dies ermöglicht den Ersatz von defekten Batteriezellen und erhöht damit die Nutzungsdauer eines Batterieblocks erheblich.

Das beschriebene Prinzip kann sich für einphasige Verbraucher, und sogar für dreiphasige Verbraucher eignen. Ein dreiphasiger modularer Wechselrichter kann beispielsweise aus drei in einer Sternschaltung zusammengeschalteten, modular konfigurierbaren Gleichspannungssträngen bzw. Multi-Level-Wechselrichtern realisiert werden, wie in der DE 102011 086 545 A1 beschrieben.

Bei dieser Schaltung ist der wesentliche Vorteil des aktiven Ladungsausgleichs der modularen Wechselrichtertechnik allerdings nur noch eingeschränkt nutzbar. Denn es ist kein direkter Ladungsausgleich zwischen den Batteriezellen in den unterschiedlichen Phasen möglich. Der Ladungsausgleich zwischen den einzelnen Phasen kann nur noch durch unterschiedliche Wirkleistungen der drei Phasen beeinflusst werden. Die dadurch verursachten Leistungsüberschüsse oder -defizite der einzelnen Phasen müssten durch das Versorgungsnetz ausgeglichen werden. Ein solcher versorgungsnetzgestützter Ladungsausgleich ist jedoch nach den Normen vieler Länder unzulässig und im Falle eines Inselbetrieb, also gänzlich ohne Versorgungsnetz, überhaupt nicht möglich.

Zum weiteren technischen Hintergrund sei außerdem noch auf die gattungsgemäße CN 114 447 970 A verwiesen, die sich auf ein Hochspannungsbatterie-Energiespeichersystem und ein Steuerungsverfahren dafür bezieht.

In Anbetracht des bekannten Stands der Technik besteht die Aufgabe der vorliegenden Erfindung darin, ein Verfahren zur Erzeugung eines Mehrphasenwechselstroms, insbesondere eines Dreiphasenwechselstroms, durch Verschalten einer Mehrzahl von Gleichspannungsquellen bereitzustellen, mit verbessertem Ladungsausgleich zwischen den Gleichspannungsquellen.

Der vorliegenden Erfindung liegt auch die Aufgabe zugrunde, ein vorteilhaftes Computerprogramm zur Durchführung eines solchen Verfahrens bereitzustellen.

Außerdem ist es Aufgabe der Erfindung, eine Schaltungsanordnung zur Erzeugung eines Mehrphasenwechselstroms, insbesondere eines Dreiphasenwechselstroms, aus einer Mehrzahl von Gleichspannungsquellen bereitzustellen, mit verbessertem Ladungsausgleich zwischen den Gleichspannungsquellen.

Es ist auch eine Aufgabe der Erfindung, ein mehrphasiges Energieversorgungssystem auf Grundlage mehrerer Gleichspannungsquellen bereitzustellen, mit verbessertem Ladungsausgleich zwischen den Gleichspannungsquellen.

Die Aufgabe wird für das Verfahren mit den in Anspruch 1 aufgeführten Merkmalen gelöst. Hinsichtlich des Computerprogramms wird die Aufgabe durch die Merkmale des Anspruchs 8 gelöst. Bezüglich der Schaltungsanordnung wird die Aufgabe durch Anspruch 9 und für das Energieversorgungssystem durch Anspruch 14 gelöst.

Die abhängigen Ansprüche und die nachfolgend beschriebenen Merkmale betreffen vorteilhafte Ausführungsformen und Varianten der Erfindung.

Es ist ein Verfahren zur Erzeugung eines Mehrphasenwechselstroms durch Verschalten einer Mehrzahl von Gleichspannungsquellen vorgesehen.

Bei dem zu erzeugenden Mehrphasenwechselstrom kann es sich vorzugsweise um einen dreiphasigen Wechselstrom bzw. um "Drehstrom" handeln. Im Grunde kann aber eine beliebige Anzahl Phasen bereitgestellt werden, beispielsweise auch nur zwei Phasen oder mehr als drei Phasen, z. B. vier Phasen oder fünf Phasen. Nachfolgend wird die Erfindung vornehmlich anhand eines Dreiphasenwechselstroms beschrieben, was allerdings nur beispielhaft und nicht einschränkend zu verstehen ist.

Die Phasen des Mehrphasenwechselstroms können gemeinsam oder einzeln in Amplitude, Phase und/oder Frequenz einstellbar sein.

Bei der Gleichspannungsquelle kann es sich insbesondere um eine einzelne Batteriezelle einer Batterie oder um eine Gruppe ("Batteriemodul") aus mehreren miteinander verschalteten Batteriezellen einer Batterie handeln. Bei der Gleichspannungsquelle kann es sich gegebenenfalls aber auch um eine komplette Batterie oder um einen Verbund aus mehreren Batterien handeln.

Unter einer "Batterie" ist vorliegend sowohl ein wieder aufladbarer Speicher zu verstehen (also ein "Akkumulator" / "Akkupack"), dessen einzelne Zellen auch "Sekundärzellen" genannt werden, als auch ein nicht wieder aufladbarer Speicher. Eine Batterie bzw. ein Batteriepack kann gegebenenfalls auch nur eine einzige Batteriezelle aufweisen. Die vorliegende Erfindung ist daher nicht unbedingt auf Batterien mit mehreren zusammengeschalteten Batteriezellen beschränkt zu verstehen. Mit einer Batterie kann im Rahmen der vorliegenden Beschreibung außerdem auch ein Speicher für elektrische Energie gemeint sein, der nicht oder nicht ausschließlich elektrochemisch aufgebaut ist, also zum Beispiel ein Kondensator.

Grundsätzlich kann es sich bei der Gleichspannungsquelle allerdings um eine beliebige Gleichspannungsquelle handeln, also beispielsweise auch um eine von einer elektronischen Baugruppe bereitgestellte Gleichspannung, beispielsweise um eine ausgangsseitig von einem Gleichrichter und/oder Gleichstromsteller bereitgestellte Gleichspannung. Die Gleichspannungsquelle kann insbesondere auch eine Gleichspannungs-Energiequelle wie z. B. eine Solarzelle bzw. eine photovoltaische Zelle sein. Die Gleichspannungsquellen werden nachfolgend und vorstehend zur Vereinfachung mitunter als Batteriezellen einer gemeinsamen Batterie bezeichnet, was jedoch nicht einschränkend, sondern nur beispielhaft zu verstehend ist.

Erfindungsgemäß ist im Rahmen des Verfahrens vorgesehen, einen konfigurierbaren Gleichspannungsstrang für jede Phase des Mehrphasenwechselstroms bereitzustellen. Jeder konfigurierbare Gleichspannungsstrang ist aus einer Mehrzahl Gleichspannungsquellen ausgebildet, die in einer konfigurierbaren Reihenschaltung miteinander verschaltbar sind. Die konfigurierbaren Gleichspannungsstränge werden (beispielsweise von einer gemeinsamen Steuereinrichtung oder von jeweiligen Steuereinrichtungen) so konfiguriert, dass der gewünschte Mehrphasenwechselstrom bereitgestellt wird.

Erfindungsgemäß ist vorgesehen, dass die konfigurierbaren Gleichspannungsstränge in einer Polygonschaltung angeordnet werden. Dabei kann es sich insbesondere um eine Dreieckschaltung handeln, insofern Dreiphasenwechselstrom bereitgestellt werden soll.

Der Mehrphasenwechselstrom kann somit durch eine der Anzahl vorgesehener Phasen entsprechende Anzahl einzelner konfigurierbarer Gleichspannungsstränge bereitgestellt werden, die jeweils für sich genommen nur einen einphasigen Wechselstrom erzeugen.

Durch die vorgeschlagene Polygonschaltung kann - im Gegensatz zu der bei modularen Wechselrichtern sonst üblichen Sternschaltung - ein Ausgleichstrom in den drei Phasen für einen Ladungsausgleich zwischen den einzelnen Phasen gebildet werden. Dieser Ausgleichstrom wird nachfolgend als "Nullsystemstrom" bezeichnet. Durch die Polygonschaltung (also z. B. eine Dreieckschaltung bei einem Dreiphasenwechselstrom) kann sichergestellt sein, dass die Schaltung keinen Nullsystemstrom nach außen, also in den vorgesehenen Belastungsströmen, liefern kann. Der Ausgleichstrom bzw. Nullsystemstrom ist daher im Verbraucher-/Kundennetz nicht bemerkbar. Der Ladungsausgleich zwischen den einzelnen Phasen, vorliegend also zwischen den einzelnen konfigurierbaren Gleichspannungssträngen, kann somit ohne Einfluss auf ein externes Versorgungsnetz und damit sogar in einem reinen Inselnetz realisiert werden.

Erfindungsgemäß ist daher vorgesehen, dass die konfigurierbaren Gleichspannungsstränge (beispielsweise von der gemeinsamen Steuereinrichtung oder den jeweiligen Steuereinrichtungen) so konfiguriert werden, dass der Nullsystemstrom für den Ladungsausgleich zwischen den konfigurierbaren Gleichspannungssträngen ausgebildet wird.

Ein Ladungsausgleich kann damit in höchstem Maße flexibel zwischen allen beteiligten Gleichspannungsquellen erfolgen - unabhängig davon, in welcher Phase bzw. in welchem Gleichspannungsstrang sich die Gleichspannungsquellen befinden.

Erfindungsgemäß ist weiterhin vorgesehen, einen Sternpunktbildner zur Realisierung eines gemeinsamen Sternpunktes aller konfigurierbaren Gleichspannungsstränge bereitzustellen.

Da die vorstehend vorgeschlagene Polygonschaltung (z. B. Dreieckschaltung) keinen Sternpunkt aufweist und somit einphasig nicht belastbar ist, wird vorgeschlagen, einen separaten Sternpunktbilder vorzusehen.

Somit kann die modulare Wechselrichtertechnologie mit allen wesentlichen Vorteilen zum Einsatz kommen und einen umfassenden und direkten Ladungsausgleich zwischen den einzelnen Phasen bereitstellen, kombiniert mit der Möglichkeit der einphasigen Belastung des bereitgestellten Stromnetzes.

Für einen Ladungsausgleich zwischen den Gleichspannungsquellen (insbesondere auch zwischen den Gleichspannungsquellen derselben Phase) kann vorgesehen sein, dass Ladungsdifferenzen der Gleichspannungsquellen erfasst werden und die erfassten Ladungsdifferenzen im Rahmen der Verschaltung der Gleichspannungsquellen zur Durchführung eines Ladungsausgleichs berücksichtigt werden.

Vorzugsweise kann der Ladungsausgleich (insbesondere der Ladungsausgleich von Gleichspannungsquellen innerhalb derselben Phase) durch die Beeinflussung der Beanspruchungsdauer der jeweiligen Gleichspannungsquellen im Rahmen der Erzeugung der Wechselspannung erfolgen. Gleichspannungsquellen mit höherer Restladung werden somit länger beansprucht als Gleichspannungsquellen mit niedrigerer Restladung. Die Zeitdauer der Stromführung der Gleichspannungsquellen dient daher vorzugsweise als Steuerungsparameter für den Ladungsausgleich. Dieses Verfahren kann beispielsweise als "Rotating Balacing" bezeichnet werden. Grundsätzlich kann im Rahmen der Erfindung allerdings unter anderem auch ein passiver Ladungsausgleich oder ein aktiver Ladungsausgleich vorgesehen sein (insbesondere beim Ladungsausgleich zwischen den einzelnen Phasen).

Zur Erfassung der Ladungsdifferenzen können entsprechende Sensoreinheiten dienen, die beispielsweise Spannungen und/oder Ströme der einzelnen Gleichspannungsquellen, einer Gruppe von Gleichspannungsquellen und/oder der Gleichspannungsquellen eines gemeinsamen Gleichspannungsstranges bzw. einer gemeinsamen Phase erfassen.

Vorzugsweise wird die Verschaltung der Gleichspannungsquellen zur Erzeugung der Wechselspannung im Hinblick auf den Ladungsausgleich festgelegt oder modifiziert.

Der Ladungsausgleich zwischen den einzelnen Phasen kann beispielsweise dadurch realisiert werden, dass die Phase mit der geringsten Ladung von den anderen (beiden) Phasen Ladung erhält oder dass die Phase mit der höchsten Ladung an die anderen (beiden) Phasen Ladung liefert.

In einer vorteilhaften Ausgestaltung der Erfindung kann vorgesehen sein, dass die Wechselspannung bzw. der Mehrphasenwechselstrom vorzugsweise durch eine treppenförmige Annäherung erzeugt wird.

Die Wechselspannung in den einzelnen Phasen kann durch kleinstufige, treppenförmig aufsummierte Einzelspannungen der einzelnen Gleichspannungsquellen des gemeinsamen Gleichspannungsstranges erzeugt werden. Die Höhe der kleinsten Spannungsstufe kann der Ausgangsspannung der jeweiligen Gleichspannungsquelle (z. B. der Zellspannung einer Batteriezelle, wie 3,7 V) entsprechen. Auf diese Weise können die ansonsten in der Regel erforderlichen, hohen Taktfrequenzen einer pulsweitenmodulierten Ausgangsspannung und die damit einhergehenden Schaltverluste stark reduziert werden.

Das beschriebene Prinzip eignet sich besonders vorteilhaft im Rahmen einer konfigurierbaren Reihenschaltung, da die Reihenschaltung im Hinblick auf einen Ladungsausgleich komfortabel und flexibel anpassbar ist. Dies schließt aber beispielsweise nicht aus, dass im Rahmen der Erfindung optional auch Gleichspannungsquellen in einer festen Verdrahtung miteinander verschaltet sind, beispielsweise in einer Reihen- und/oder Parallelschaltung. Beispielsweise können Batteriemodule aus zwei, drei, vier, fünf, sechs, sieben, acht, neun, zehn oder noch mehr fest miteinander verschalteten Batteriezellen gebildet werden, die dann wiederum mit weiteren Batteriemodulen oder Batteriezellen konfigurierbar verschaltet werden. Eine feste Verdrahtung von Gleichspannungsquellen bzw. Batteriezellen kann beispielsweise mittels Stromschienen oder sonstigen geeigneten elektrischen Leitern erfolgen.

In einer vorteilhaften Weiterbildung der Erfindung kann vorgesehen sein, dass durch entsprechende Konfiguration der Verschaltung der einzelnen Gleichspannungsquellen der jeweiligen konfigurierbaren Gleichspannungsstränge ein symmetrischer Dreiphasenwechselstrom bereitgestellt wird, mit vorzugsweise den folgenden Zusammenhängen zwischen den Wechselspannungen der einzelnen Phasen: $u_{L1}(t) = \hat{U} \cdot cos(2 \cdot \pi \cdot f \cdot t)$; $u_{L2}(t) = \hat{U} \cdot cos(2 \cdot \pi \cdot f \cdot t - 120°)$ und $u_{L3}(t) = \hat{U} \cdot cos(2 \cdot \pi \cdot f \cdot t - 240°)$, mit dem Spitzenwert $\hat{U}$ und der Netzfrequenz $f$.

Vergleichbare Zusammenhänge können - sofern gewünscht - vom Fachmann auch ohne Weiteres für einen Mehrphasenwechselstrom mit nur zwei Phasen oder mehr als drei Phasen aufgestellt werden.

Der Spitzenwerte der Wechselspannung kann beispielsweise 566 Volt für ein 400 Volt Drehstromnetz betragen, mit einer Netzfrequenz von 50 Hz (z. B. für eine Anwendung in Deutschland).

Gemäß einer Weiterbildung der Erfindung kann vorgesehen sein, dass der Nullsystemstrom in jedem der konfigurierbaren Gleichspannungsstränge in Amplitude und Phase identisch ist.

Insbesondere kann vorgesehen sein, dass durch entsprechende Konfiguration der Verschaltung der einzelnen Gleichspannungsquellen der jeweiligen konfigurierbaren Gleichspannungsstränge zur Ausbildung des Nullsystemstroms jeweils eine Nullsystemspannung gemäß $u_0(t) = \hat{U}_0 \cdot cos(2 \cdot \pi \cdot f \cdot t + \varphi_0)$ zu den Wechselspannungen der einzelnen Phasen addiert wird, mit der Amplitude $\hat{U}_0$ und dem Phasenwinkel $\varphi_0$ der Nullsystemspannung.

Es können daher die folgenden Definitionen für die einzelnen Wechselspannungen unter Berücksichtigung des Nullsystemstroms gelten:

$$u_{L1}(t) = \widehat{U} \cdot \cos(2 \cdot \pi \cdot f \cdot t) + \widehat{U}_0 \cdot cos(2 \cdot \pi \cdot f \cdot t + \varphi_0),$$

$$u_{L2}(t) = \widehat{U} \cdot \cos(2 \cdot \pi \cdot f \cdot t - 120°) + \widehat{U}_0 \cdot cos(2 \cdot \pi \cdot f \cdot t + \varphi_0)$$

$$u_{L3}(t) = \widehat{U} \cdot \cos(2 \cdot \pi \cdot f \cdot t - 240°) + \widehat{U}_0 \cdot cos(2 \cdot \pi \cdot f \cdot t + \varphi_0).$$

Alternativ können die einzelnen Wechselspannungen unter Berücksichtigung des Zusammenhangs

$$\widehat{U}_0 \cdot \cos(2 \cdot \pi \cdot f \cdot t + \varphi_0) = \widehat{U}_{d0} \cdot cos(2 \cdot \pi \cdot f \cdot t) + \widehat{U}_{q0} \cdot sin(2 \cdot \pi \cdot f \cdot t),$$

mit $\hat{U}_{d0}$ als d-Komponente und $\hat{U}_{q0}$ als q-Komponente der Nullsystemspannung auch bestimmt werden als:

$$u_{L1}(t) = \hat{U} \cdot \cos(2 \cdot \pi \cdot f \cdot t) + \hat{U}_{d0} \cdot cos(2 \cdot \pi \cdot f \cdot t) + \hat{U}_{q0} \cdot sin(2 \cdot \pi \cdot f \cdot t),$$

$$u_{L2}(t) = \hat{U} \cdot \cos(2 \cdot \pi \cdot f \cdot t - 120°) + \hat{U}_{d0} \cdot cos(2 \cdot \pi \cdot f \cdot t) + \hat{U}_{q0} \cdot sin(2 \cdot \pi \cdot f \cdot t)$$

$$u_{L3}(t) = \hat{U} \cdot \cos(2 \cdot \pi \cdot f \cdot t - 240°) + \hat{U}_{d0} \cdot cos(2 \cdot \pi \cdot f \cdot t) + \hat{U}_{q0} \cdot sin(2 \cdot \pi \cdot f \cdot t).$$

Die d- und q-Komponenten weisen eine Phasenverschiebung von 90° zueinander auf und stehen als Zeiger orthogonal (senkrecht) zueinander. Die d-Komponente kann mit einer der Mischsystemspannungen in Phase sein (vorstehend beispielhaft mit $u_{L1}(t)$, also der Phase L1).

Mit der zusätzlichen Spannungskomponente bzw. der Nullsystemspannung $u_0(t)$ kann ein Nullsystemstrom $\underline{I}_0 = \underline{I}_{d0} + \underline{I}_{q0}$ mit einem bestimmten Effektivwert $I_0$ und Phasenwinkel $\varphi_{I0}$ erzeugt werden, wobei $\underline{I}_0$ in eine d- Komponente $\underline{I}_{d0}$ und eine q- Komponente $\underline{I}_{q0}$ zerlegt werden kann. Wie bei den Spannungen stehen auch die beiden Stromkomponenten $\underline{I}_{d0}$ und $\underline{I}_{q0}$ als Zeiger orthogonal und weisen eine Phasenverschiebung von 90° zueinander auf. Die d-Komponente ist im vorliegenden Beispiel mit der Mitsystemspannung $u_{L1}(t)$ der Phase L1 in Phase. Damit gelten die folgenden Zusammenhänge:

$$i_{L1p}(t) = I \cdot \cos(2 \cdot \pi \cdot f \cdot t + \varphi_I) + I_{d0} \cdot cos(2 \cdot \pi \cdot f \cdot t) + I_{q0} \cdot sin(2 \cdot \pi \cdot f \cdot t),$$

$$i_{L2p}(t) = I \cdot \cos(2 \cdot \pi \cdot f \cdot t + \varphi_I - 120°) + I_{d0} \cdot cos(2 \cdot \pi \cdot f \cdot t) + I_{q0} \cdot sin(2 \cdot \pi \cdot f \cdot t)$$

$$i_{L3p}(t) = I \cdot \cos(2 \cdot \pi \cdot f \cdot t + \varphi_I - 240°) + I_{d0} \cdot cos(2 \cdot \pi \cdot f \cdot t) + I_{q0} \cdot sin(2 \cdot \pi \cdot f \cdot t),$$

mit *I* **als Amplitude** und $\varphi_I$ als Phasenwinkel des Mitsystemstroms der Phasen.

In einer Weiterbildung der Erfindung kann vorgesehen sein, dass eines oder mehrere Regelungsverfahren zur Festlegung des Nullsystemstroms eingesetzt werden.

Als Stellgröße für die Regelung kann die Nullsystemspannung, als Führungsgröße ein Sollwert des Nullsystemstroms und als Regelgröße der erfasste Istwert des Nullsystemstroms verwendet werden.

Erfindungsgemäß ist vorgesehen, dass eine q-Komponente des Nullsystemstroms minimiert wird. Vorzugsweise beträgt der Sollwert der q-Komponente null bzw. die q-Komponente wird auf null geregelt.

Auf diese Weise können Verluste durch den Ladungsausgleich minimiert werden. Vorzugsweise ist keine Blindleistung im Nullsystem vorgesehen (Blindleistung = Null).

Erfindungsgemäß ist alternativ oder zusätzlich zu der Minimierung der q-Komponente vorgesehen, dass ein Sollwert einer d-Komponente des Nullsystemstroms unter Berücksichtigung eines Ladungsunterschieds zwischen den Gleichspannungsquellen der Gleichspannungsstränge festgelegt wird.

Vorzugsweise wird der Sollwert der d-Komponente des Nullsystemstroms gemäß einem proportionalen Zusammenhang zu dem Ladungsunterschied zwischen den Gleichspannungsquellen der Gleichspannungsstränge festgelegt.

Die d-Komponente des Nullsystemstroms kann vorteilhaft auf einen nach der Höhe der Ladungsunterschiede bestimmten Wert, z. B. 1 A für einen Ladungsunterschied von 1%, geregelt werden.

An dieser Stelle sei betont, dass die genannten Verfahrensschritte nicht unbedingt in der Reihenfolge durchgeführt werden müssen, in der sie in der Beschreibung oder in den Ansprüchen erstmals beschrieben oder erwähnt sind. Es können daher beispielsweise einzelne Verfahrensschritte oder Gruppen von Verfahrensschritten untereinander austauschbar sein, wenn dies technisch nicht ausgeschlossen ist. Auch können Verfahrensschritte miteinander kombiniert, in separate Zwischenschritte aufgeteilt oder mit Zwischenschritten ergänzt werden. Das Verfahren ist mit den aufgeführten Verfahrensschritten auch nicht unbedingt abschließend beschrieben und kann mit weiteren, auch nicht genannten Verfahrensschritten, ergänzt werden.

Die Erfindung betrifft auch ein Computerprogramm, umfassend Steuerbefehle, die bei der Ausführung des Programms durch eine Steuereinrichtung diese veranlassen, das Verfahren gemäß den vorstehenden und nachfolgenden Ausführungen auszuführen.

Die Steuereinrichtung kann als Mikroprozessor ausgebildet sein. Anstelle eines Mikroprozessors kann auch eine beliebige weitere Einrichtung zur Implementierung der Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer. Die Steuereinrichtung kann sich auch als Kombination mehrerer dezentral innerhalb der nachfolgend noch genannten Schaltungsanordnung verteilt angeordneter elektronischer Bauteile ergeben.

Die Steuereinrichtung kann auch ein Funktionsmodul einer übergeordneten Steuereinheit sein, beispielsweise ein Funktionsmodul eines Batteriemanagementsystems der Gleichspannungsquellen oder eine Steuereinheit des nachfolgend noch genannten Energieversorgungssystems (z. B. eines Fahrzeugs).

Die Erfindung betrifft auch eine Schaltungsanordnung zur Erzeugung eines Mehrphasenwechselstroms, insbesondere eines Dreiphasenwechselstroms, aus einer Mehrzahl von Gleichspannungsquellen gemäß Anspruch 9.

Die wenigstens eine Gleichspannungsquelle ist vorzugsweise nicht als Komponente der Schaltungsanordnung zu verstehen.

Die vorgeschlagene, neuartige Schaltungsanordnung eignet sich ganz besonders für dreiphasige modulare Wechselrichter mit Batterien als Energiespeicher. Der besondere Vorteil der vorgeschlagenen Schaltungsanordnung ist die Möglichkeit eines phasenübergreifenden Ladungsausgleichs und die gleichzeitige Möglichkeit einer einphasigen Belastung durch separate Ausbildung des Sternpunktes, der vom Verbraucher auf reguläre Weise belastbar ist.

In einer Weiterbildung der Erfindung kann vorgesehen sein, dass jeder der konfigurierbaren Gleichspannungsstränge eine ausgangsseitige Schnittstelle zur Bereitstellung der erzeugten Wechselspannung aufweist, sowie eine Kaskade aus mehreren Wechselrichtereinheiten, die gemeinsam die Wechselspannung an der ausgangsseitigen Schnittstelle bereitzustellen vermögen.

Jede der Wechselrichtereinheiten ist vorzugsweise eingerichtet, zumindest eine mit der jeweiligen Wechselrichtereinheit verbindbare Gleichspannungsquelle in die Erzeugung der Wechselspannung einzubeziehen oder von der Erzeugung der Wechselspannung auszuschließen.

Die Verbindung zwischen den Wechselrichtereinheiten und den Gleichspannungsquellen kann beispielsweise über entsprechende Versorgungsleitungen und/oder Stromschienen erfolgen.

Auf einer Kaskade mehrerer Wechselrichtereinheiten basierende Wechselrichter werden auch "modulare Wechselrichter" genannt. Bei dieser Technik werden die einzelnen Gleichspannungsquellen nicht direkt, sondern über die einzelnen Wechselrichtereinheiten, beispielsweise die nachfolgend noch genannten leistungselektronischen H-Brücken, in Reihe geschaltet.

Da die einzelnen Gleichspannungsquellen jeweils über eine separate Wechselrichtereinheit zu- oder abgeschaltet werden können, ist ein Ladungsausgleich zwischen den Gleichspannungsquellen, also beispielsweise zwischen mehreren Batteriezellen, möglich. Bei einem Ausfall von Gleichspannungsquellen kann der Wechselrichter außerdem mit den noch funktionsbereiten Gleichspannungsquellen weiterbetrieben werden. Die Verfügbarkeit des Energieversorgungssystems kann hierdurch viel höher sein als bei der konventionellen Technik einer direkten Reihenschaltung der Gleichspannungsquellen. Defekte Gleichspannungsquellen, beispielsweise defekte Batteriezellen, können ausgeschaltet und überbrückt werden. Dadurch ist nicht zuletzt auch die Möglichkeit gegeben, diese Gleichspannungsquellen sogar während des Betriebs sicher auszuwechseln.

Auf vorteilhafte Weise können Gleichspannungsquellen unterschiedlichen Alters bzw. Zustands und unterschiedlichen Typs in demselben Energieversorgungssystem eingesetzt werden. Die Nutzungsdauer, beispielsweise eines Batterieblocks, kann dadurch erheblich verlängert werden.

In einer vorteilhaften Weiterbildung der Erfindung kann vorgesehen sein, dass die Wechselrichtereinheiten jeweils eine H-Brückenschaltung aus vier konfigurierbaren leistungselektronischen Schaltelementen aufweisen.

Derartige H-Brückenschaltungen sind grundsätzlich bekannt (vgl. auch "kaskadierte H-Brücke"). Beispielsweise sei diesbezüglich auf die DE 10 2018 003 642 A1 verwiesen, deren Offenbarungsgehalt durch diese Bezugnahme vollständig in die vorliegende Beschreibung aufgenommen sei. Die Erfindung eignet sich besonders vorteilhaft zur Verwendung mit Wechselrichtern, die auf kaskadierten H-Brücken basieren. Denn auf diese Weise kann vorteilhaft eine Anpassung der Verschaltung der Gleichspannungsquellen im Hinblick auf den Ladungsausgleich stattfinden.

Beispielsweise können jeweils zwei der genannten leistungselektronischen Schaltelemente mit ihren Ausgängen zu einer Reihenschaltung verbunden sein und jeweils einen gemeinsamen Verbindungszweig der H-Brückenschaltung ausbilden. Es können zwei derartige Verbindungszweige vorgesehen sein. In beiden Verbindungszweigen kann zwischen den leistungselektronischen Schaltelementen jeweils ein Ausgang der Wechselrichtereinheit angeschlossen sein. Die jeweiligen Enden der Verbindungszweige können miteinander verbunden sein, wobei an jedem Ende ein Eingang der Wechselrichtereinheit angeschlossen ist; die beiden Verbindungszweige können somit parallelgeschaltet sein.

Es kann vorgesehen sein, dass die konfigurierbaren leistungselektronischen Schaltelemente als Bipolartransistoren oder vorzugsweise als MOSFETs ausgebildet sind. Es können grundsätzlich aber beliebige Schaltelemente, insbesondere Halbleiterbauelemente, zum Einsatz kommen. Die konfigurierbaren leistungselektronischen Schaltelemente können auch als Relais ausgebildet sein. Die Bauart der konfigurierbaren leistungselektronischen Schaltelemente ist grundsätzlich nicht einschränkend für die Erfindung.

Die leistungselektronischen Schaltelemente können beispielsweise von der vorstehend genannten Steuereinrichtung und/oder dem Steuermodul konfigurierbar sein. Es kann vorgesehen sein, dass die Steuereinrichtung eingerichtet ist, einzelne Gleichspannungsquellen in Abhängigkeit der von dem Steuermodul zu dieser Gleichspannungsquelle übermittelten Zustandsinformationen wahlweise in die Erzeugung der Wechselspannung einzubeziehen oder zumindest zeitweise auszuschließen.

Die Gleichspannungsquellen können insbesondere im Rahmen des Ladungsausgleichs oder aus sonstigen Gründen zeitweise ausgeschlossen werden. Es kann beispielsweise auch vorgesehen sein, fehlerhafte oder überhitzte Gleichspannungsquellen längerfristig auszuschließen. Insbesondere können auch tiefentladene Batteriezellen längerfristig ausgeschlossen werden.

In einer vorteilhaften Weiterbildung der Erfindung kann vorgesehen sein, dass der Sternpunktbildner einen Transformator aufweist.

Der Transformator kann beispielsweise eine Stern-Dreieck-Schaltung, Zickzackschaltung oder eine andere geeignete Verschaltung aufweisen, um einen Sternpunkt auszubilden.

In einer vorteilhaften Weiterbildung der Erfindung kann vorgesehen sein, dass der Sternpunktbildner für eine Maximalbelastung ausgelegt ist, die kleiner ist als 10 kW, vorzugsweise kleiner ist als 8 kW, besonders bevorzugt kleiner ist als 5 kW.

Es kann ausreichend sein, den Sternpunktbildner (also beispielsweise den Transformator) nur für einen begrenzten Leistungsgrenzwert zu dimensionieren. Die technischen und wirtschaftlichen Anforderungen an die Bereitstellung des Sternpunktbildners können beispielsweise auf die in dem jeweiligen Land herrschenden Normen oder an die vorgesehene Anwendung angepasst werden. Beispielsweise darf die Summe aller einphasigen Belastungen in einem Kundennetz in der Regel einen bestimmten Grenzwert ohnehin nicht überschreiten - in Deutschland z. B. 4,6 kW und in Österreich z. B. 3,7 kW.

Die Dimensionierung des Sternpunktbildners im Hinblick auf derartige Grenzwerte, also beispielsweise die Grenzwerte 4,6 kW oder 3,7 kW, kann insbesondere vorteilhaft sein, wenn die Nennleistungen der Gleichspannungsquellen bzw. Energiespeicher weit über diesen Grenzwerten liegen.

Die Erfindung betrifft auch ein Energieversorgungssystem, aufweisend eine Schaltungsanordnung gemäß den vorstehenden und nachfolgenden Ausführungen und die Gleichspannungsquellen. Die Gleichspannungsquellen sind mit den entsprechenden konfigurierbaren Gleichspannungssträngen verbunden.

In dem vorgeschlagenen Energieversorgungssystem können somit die Gleichspannungsquellen in jeweiligen Gleichspannungssträngen auf die einzelnen Phasen in einer Dreieckschaltung aufgeteilt werden. Mit beispielsweise einem Transformator in einer Stern-Dreieck-Schaltung oder einer Zickzackschaltung kann der "fehlende" Sternpunkt realisiert werden. Somit werden die dreiphasigen Belastungen (d. h. die Stromanteile im so genannten Mit- und Gegensystem) automatisch von den Gleichspannungsquellen (d. h. also beispielsweise von einem Energiespeicher, der die Gleichspannungsquellen aufweist) übernommen. Die einphasige Belastung (d. h. der Strom im so genannten Nullsystem) kann automatisch vom Sternpunktbildner bzw. Transformator übernommen werden, da dieser Stromanteil über den Sternpunktbildner und dessen Sternpunkt fließen kann.

Eine besonders vorteilhafte Anwendung des vorgeschlagenen Energieversorgungssystems betrifft die elektrische Versorgung von elektrischen Verbrauchern eines Elektrofahrzeugs, insbesondere eines Elektroautos.

In einer Weiterbildung der Erfindung kann vorgesehen sein, dass die Gleichspannungsquellen als Batteriezellen einer Batterie ausgebildet sind.

Die Erfindung betrifft auch eine elektrische Verbraucheranordnung, insbesondere ein Elektrofahrzeug, aufweisend ein Energieversorgungssystem gemäß den vorstehenden und nachfolgenden Ausführungen, und zumindest einen elektrischen Verbraucher.

An einer ausgangsseitigen Schnittstelle des Energieversorgungssystems kann ein Verbraucher oder können mehrere Verbraucher anschließbar oder angeschlossen sein. Bei dem Verbraucher kann es sich um einen beliebigen elektrischen Verbraucher bis hin zu einer Gruppe aus mehreren elektrischen Verbrauchern handeln. Vorzugsweise handelt es sich bei dem Verbraucher um einen Elektromotor, um ein Antriebsaggregat und/oder um zumindest einen elektrischen Verbraucher innerhalb eines Niederspannungsnetzes (insbesondere eines Haushaltsstromnetzes).

Grundsätzlich kann es sich bei der elektrischen Verbraucheranordnung um eine beliebige Verbraucheranordnung handeln, die zumindest einen elektrischen Verbraucher aufweist. Beispielsweise kann es sich bei der Verbraucheranordnung um eine Elektrowerkzeugmaschine bis hin zu einem mit elektrischer Energie zu versorgenden Gebäude handeln.

Besonders bevorzugt handelt es sich bei der elektrischen Verbraucheranordnung um ein Elektrofahrzeug. Der Begriff "Elektrofahrzeug" beschreibt jegliches elektrisch betriebene Fortbewegungsmittel, insbesondere Fahrzeuge zu Lande, zu Wasser oder in der Luft, eingeschlossen auch Raumfahrzeuge. Vorzugsweise handelt es sich bei dem Elektrofahrzeug bzw. bei der Verbraucheranordnung allerdings um ein Elektroauto.

Die Erfindung eignet sich insbesondere aber auch zur elektrischen Versorgung von Haushalten oder Industrieanlagen.

Merkmale, die im Zusammenhang mit einem der Gegenstände der Erfindung, namentlich gegeben durch das erfindungsgemäße Verfahren, die erfindungsgemäße Schaltungsanordnung, das erfindungsgemäße Energieversorgungssystem, die erfindungsgemäße Verbraucheranordnung und das erfindungsgemäße Computerprogramm, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

An dieser Stelle sei darauf hingewiesen, dass der in der vorliegenden Beschreibung und in den Ansprüchen verwendete Begriff "verbunden" bzw. "Verbindung" eine unmittelbare elektrische Verbindung der genannten Komponenten, aber auch eine mittelbare elektrische Verbindung der genannten Komponenten (also z. B. über weitere elektrische Leitungen oder elektronische Bauteile wie Widerstände, Induktivitäten und/oder Kapazitäten etc.) beschreiben kann. Der Begriffe "angeschlossen" deutet hingegen in der Regel eine unmittelbare Verbindung der genannten Komponenten an.

Ferner sei betont, dass die vorliegend beschriebenen Werte und Parameter Abweichungen oder Schwankungen von $\pm 10\%$ oder weniger, vorzugsweise $\pm 5\%$ oder weniger, weiter bevorzugt $\pm 1\%$ oder weniger, und ganz besonders bevorzugt $\pm 0,1\%$ oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:

Figur 1     ein Energieversorgungssystem mit einer Schaltungsanordnung zur Erzeugung eines Dreiphasenwechselstroms aus drei in einer Dreieckschaltung verbundenen konfigurierbaren Gleichspannungssträngen, mit einem Transformator als separatem Sternpunktbilder, gemäß einem ersten Ausführungsbeispiel der Erfindung;

Figur 2     ein Energieversorgungssystem mit einer Schaltungsanordnung zur Erzeugung eines Dreiphasenwechselstroms aus drei in einer Dreieckschaltung verbundenen konfigurierbaren Gleichspannungssträngen, mit einem Transformator als separatem Sternpunktbilder, gemäß einem zweiten Ausführungsbeispiel der Erfindung;

Figur 3     eine H-Brückenschaltung einer beispielhaften Wechselrichtereinheit eines konfigurierbaren Gleichspannungsstrangs;

Figur 4     ein Regelungsverfahren gemäß einer ersten Variante;

Figur 5     ein Regelungsverfahren gemäß einer zweiten Variante;

Figur 6     ein Regelungsverfahren gemäß einer dritten Variante; und

Figur 7     ein Regelungsverfahren gemäß einer vierten Variante.

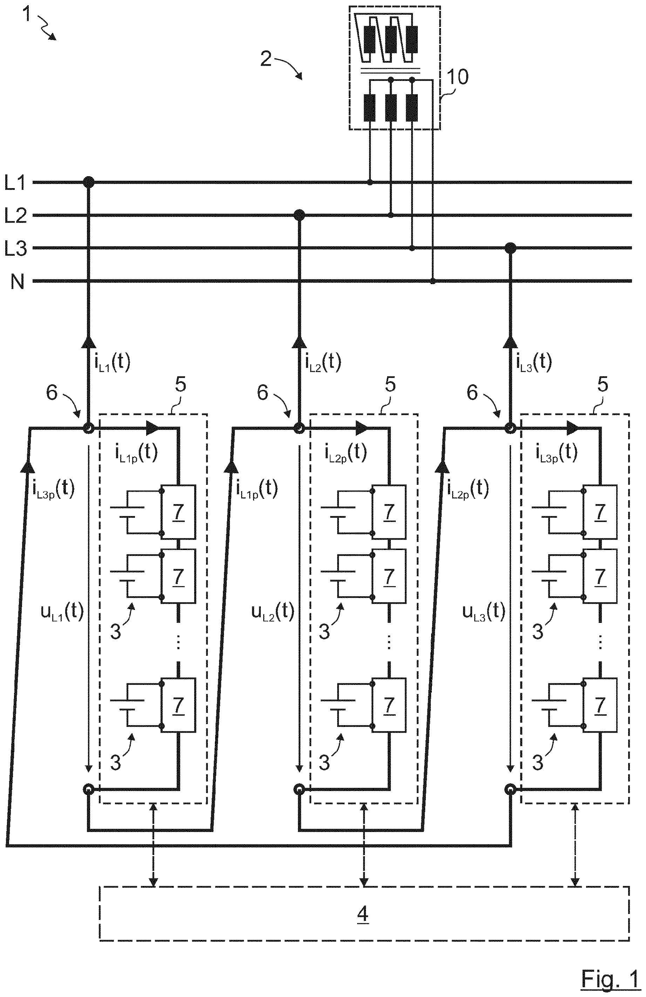

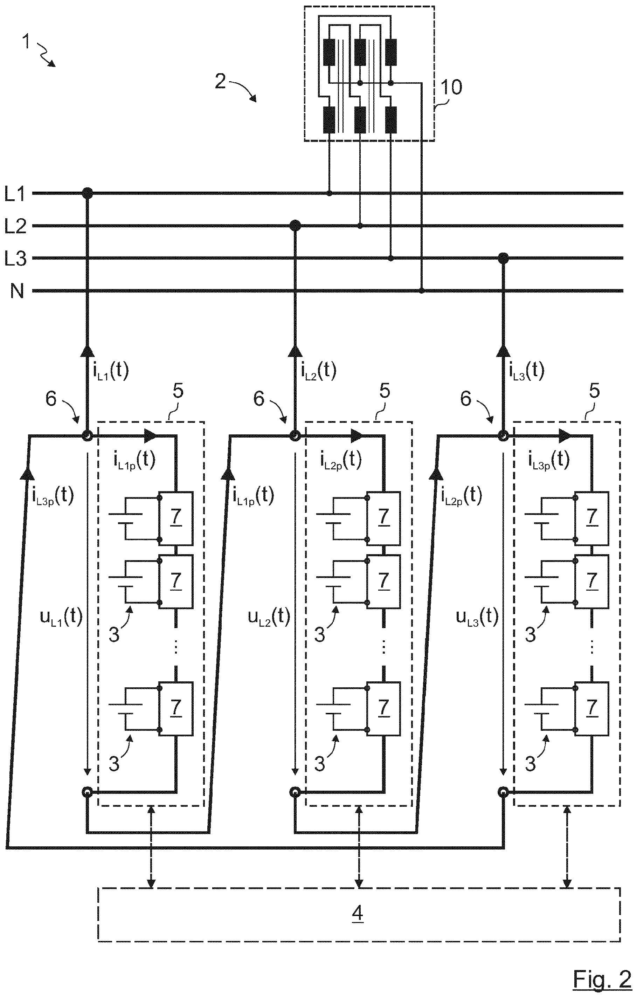

In den Figuren 1 und 2 sind zwei Ausführungsbeispiele des vorgeschlagenen Energieversorgungssystems 1 dargestellt. Das Energieversorgungssystem 1 stellt einen Dreiphasenwechselstrom bereit und weist daher drei Phasen L1, L2 und L3 sowie einen Neutralleiter bzw.

Sternpunkt N auf. Das Energieversorgungssystem 1 kann beispielsweise Teil eines Elektrofahrzeugs sein (insbesondere Teil eines Elektroautos), um einen elektrischen Verbraucher des Elektrofahrzeugs (insbesondere einen Elektromotor, genauer gesagt einen Wechsel- oder Drehstrommotor) elektrisch zu versorgen. Grundsätzlich kann es sich aber um ein beliebiges Energieversorgungssystem 1 handeln, um einen beliebigen elektrischen Verbraucher mit elektrischer Energie zu versorgen, also beispielsweise auch um ein Haushaltsstromnetz.

Das Energieversorgungssystem 1 weist eine Schaltungsanordnung 2 sowie mehrere Gleichspannungsquellen 3 auf. Die Gleichspannungsquellen 3 sind im Ausführungsbeispiel Teil einer gemeinsamen, nicht näher dargestellten Energiespeicherbaugruppe. Bei der Energiespeicherbaugruppe handelt es sich vorzugsweise um eine Batterie bzw. um ein Akkupack, wobei die einzelnen Gleichspannungsquellen 3 als Batteriezellen bzw. Akkuzellen der Batterie bzw. des Akkupacks ausgebildet sein können. Insbesondere kann es sich bei den Gleichspannungsquellen 3 um Batteriezellen eines Hochvoltspeichers eines Elektrofahrzeugs oder eines Heimspeichers handeln.

Das Energieversorgungssystem 1 bzw. die Schaltungsanordnung 2 kann eines oder vorzugsweise mehrere Steuereinheiten aufweisen, um Zustandsinformationen betreffend die Batteriezellen 3 zu ermitteln. Bei den genannten Zustandsinformationen kann es sich insbesondere um Informationen zur aktuellen Batteriezellspannung, zur aktuellen Temperatur, zum aktuellen Ladezustand oder zum aktuellen "Gesundheitszustand" der jeweiligen Batteriezelle 3 handeln. In den Ausführungsbeispielen ist eine einzige zentrale Steuereinrichtung 4 dargestellt, was allerdings nur beispielhaft zu verstehen ist.

Die Gleichspannungsquellen 3 bzw. Batteriezellen sind auf drei konfigurierbare Gleichspannungsstränge 5 aufgeteilt, so dass pro Gleichspannungsstrang 5 eine konfigurierbare Reihenschaltung aus Gleichspannungsquellen 3 bzw. Batteriezellen vorliegt. Jeder Gleichspannungsstrang 5 ist einer der drei Phasen L1, L2, L3 zugeordnet und weist eine ausgangsseitige Schnittstelle 6 auf, an der eine jeweilige Wechselspannung $u_{L1}(t)$, $u_{L2}(t)$, $u_{L3}(t)$ anliegt. Die Gleichspannungsstränge 5 sind in einer gemeinsamen Dreieckschaltung angeordnet.

Jeder der konfigurierbaren Gleichspannungsstränge 5 weist eine Kaskade aus mehreren Wechselrichtereinheiten 7 auf, die gemeinsam die jeweilige Wechselspannung $u_{L1}(t)$, $u_{L2}(t)$, $u_{L3}(t)$ an der ausgangsseitigen Schnittstelle 6 bereitzustellen vermögen. Jede dieser Wechselrichtereinheiten 7 ist eingerichtet, die mit der jeweiligen Wechselrichtereinheit 7 verbindbare Gleichspannungsquelle 3 wahlweise in die Erzeugung der Wechselspannung $u_{L1}(t)$, $u_{L2}(t)$, $u_{L3}(t)$ einzubeziehen oder von der Erzeugung der Wechselspannung $u_{L1}(t)$, $u_{L2}(t)$, $u_{L3}(t)$ auszuschließen.

Die Steuereinrichtung 4 kann entsprechend eingerichtet sein, die Wechselrichtereinheiten 7 so zu konfigurieren, dass die ausgangsseitige Wechselspannung $u_{L1}(t)$, $u_{L2}(t)$, $u_{L3}(t)$ des Gleichspannungsstrangs 5 hinsichtlich Amplitude, Phase und/oder Frequenz den gewünschten Vorgaben entspricht. Durch entsprechende Konfiguration der Verschaltung der einzelnen Gleichspannungsquellen 3 der jeweiligen konfigurierbaren Gleichspannungsstränge 5 kann damit insgesamt ein symmetrischer Dreiphasenwechselstrom bereitgestellt werden.

Es kann ein Computerprogramm vorgesehen sein, umfassend Steuerbefehle, die bei der Ausführung des Programms durch die Steuereinrichtung 4 diese veranlassen, ein entsprechendes Verfahren zur Erzeugung der Wechselspannungen $u_{L1}(t)$, $u_{L2}(t)$, $u_{L3}(t)$ bzw. des Mehrphasenwechselstroms durch geeignete Verschaltung der Gleichspannungsquellen 3 bzw. Batteriezellen durchzuführen.

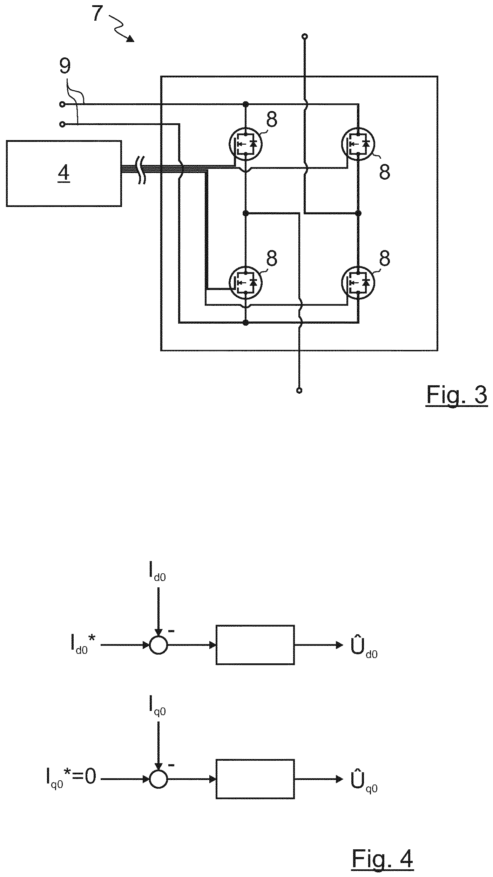

Ein möglicher Aufbau einer einzelnen Wechselrichtereinheit 7 ist in Figur 3 beispielhaft gezeigt. Die Wechselrichtereinheiten 7 können insbesondere jeweils eine H-Brückenschaltung aus vier von der Steuereinrichtung 4 konfigurierbaren leistungselektronischen Schaltelementen 8 aufweisen. Die Steuereinrichtung 4 ist in Figur 3 ebenfalls beispielhaft angedeutet. Die leistungselektronischen Schaltelemente 8 können insbesondere als Halbleiterbauelemente ausgebildet sein, z. B. als in Figur 3 angedeutete MOSFETs. Die Steuereinrichtung 4 kann zur Ansteuerung der Schaltelemente 8 ausgebildet sein. Über entsprechende Versorgungsleitungen 9 kann die Wechselrichtereinheit 7 schließlich mit der zugeordneten Gleichspannungsquelle 3 verbunden sein. Entsprechende H-Brückenschaltungen sind dem Fachmann bekannt, weshalb auf weitere Details nicht näher eingegangen werden soll.

Die Schaltungsanordnung 2 bzw. das Energieversorgungssystem 1 weist außerdem einen Sternpunktbildner 10 zur Realisierung des gemeinsamen Sternpunktes N aller konfigurierbaren Gleichspannungsstränge 5 auf. Auf vorteilhafte Weise kann hierzu ein (kleiner) Transformator mit einer Stern-Dreieckschaltung (vgl. Figur 1) oder einer Zickzackschaltung (vgl. Figur 2) eingesetzt werden. Es kann ausreichend sein, den Sternpunktbildner 10, also beispielsweise den Transformator, für eine Maximalbelastung auszulegen, die kleiner ist als 10 kW, vorzugsweise kleiner ist als 8 kW, besonders bevorzugt kleiner ist als 5 kW.

Es ist vorgesehen, dass die Steuereinrichtung 4 die Gleichspannungsstränge 5 derart konfiguriert, dass einerseits die Ladungen der Gleichspannungsquellen 3 desselben Gleichspannungsstrangs 5 möglichst ausgeglichen werden und dass außerdem ein Nullsystemstrom $\underline{I}_0 = \underline{I}_{d0} + \underline{I}_{q0}$ mit dem gewünschten Effektivwert $I_0$ und Phasenwinkel $\varphi_{I0}$ zwischen den Gleichspannungssträngen 5 der unterschiedlichen Phasen L1, L2, L3 ausgebildet wird, um auch einen phasenübergreifenden Ladungsausgleich zu ermöglichen. Dieser Nullsystemstrom ist in jedem konfigurierbaren Gleichspannungsstrang 5 in Amplitude und Phase identisch und kann sich aus einer Nullsystemspannung gemäß $u_0(t) = \hat{U}_0 \cdot \cos$ $(2 \cdot \pi \cdot f \cdot t + \varphi_0)$ mit Amplitude $\hat{U}_0$ und Phasenwinkel $\varphi_0$ ergeben. Die Nullsystemspannung kann durch eine entsprechende Verschaltung der Gleichspannungsquellen 3 zusätzlich zu den einzelnen Wechselspannungen $u_{L1}(t)$, $u_{L2}(t)$, $u_{L3}(t)$ eingestellt werden. Hierbei können die folgenden Zusammenhänge vorgesehen sein:

$$u_{L1}(t) = \hat{U} \cdot \cos(2 \cdot \pi \cdot f \cdot t) + \hat{U}_{d0} \cdot cos(2 \cdot \pi \cdot f \cdot t) + \hat{U}_{q0} \cdot sin(2 \cdot \pi \cdot f \cdot t),$$

$$u_{L2}(t) = \hat{U} \cdot \cos(2 \cdot \pi \cdot f \cdot t - 120°) + \hat{U}_{d0} \cdot cos(2 \cdot \pi \cdot f \cdot t) + \hat{U}_{q0} \cdot sin(2 \cdot \pi \cdot f \cdot t)$$

$$u_{L3}(t) = \hat{U} \cdot \cos(2 \cdot \pi \cdot f \cdot t - 240°) + \hat{U}_{d0} \cdot cos(2 \cdot \pi \cdot f \cdot t) + \hat{U}_{q0} \cdot sin(2 \cdot \pi \cdot f \cdot t),$$

mit $\hat{U}_{d0}$ als d-Komponente und $\hat{U}_{q0}$ als q-Komponente der Nullsystemspannung.

Somit kann für die Wechselströme der einzelnen Phasen L1, L2, L3 gelten:

$$i_{L1p}(t) = I \cdot \cos(2 \cdot \pi \cdot f \cdot t + \varphi_I) + I_{d0} \cdot cos(2 \cdot \pi \cdot f \cdot t) + I_{q0} \cdot sin(2 \cdot \pi \cdot f \cdot t),$$

$$i_{L2p}(t) = I \cdot \cos(2 \cdot \pi \cdot f \cdot t + \varphi_I - 120°) + I_{d0} \cdot cos(2 \cdot \pi \cdot f \cdot t) + I_{q0} \cdot sin(2 \cdot \pi \cdot f \cdot t)$$

$$i_{L3p}(t) = I \cdot \cos(2 \cdot \pi \cdot f \cdot t + \varphi_I - 240°) + I_{d0} \cdot cos(2 \cdot \pi \cdot f \cdot t) + I_{q0} \cdot sin(2 \cdot \pi \cdot f \cdot t),$$

mit der d-Komponente $I_{d0}$ und der q-Komponente $I_{q0}$ des Nullsystemstroms, sowie $I$ als Amplitude und $\varphi_I$ als Phasenwinkel des Mitsystemstroms der Phasen L1, L2, L3.

Vorzugsweise kann der Ladungsausgleich durch eine der nachfolgenden zwei Varianten realisiert werden:

a) Die Phase mit der niedrigsten Ladung erhält Ladung von den anderen beiden Phasen. In diesem Fall ist die Leistung der Phase mit der niedrigsten Ladung im Verbraucher-Zählpfeilsystem positiv - das heißt, von dieser Phase wird Wirkleistung aufgenommen. Die Stromkomponente $I_{d0}$ ist positiv; oder

b) Die Phase mit der höchsten Ladung liefert Ladung an die anderen beiden Phasen. In diesem Fall ist die Leistung der Phase mit der höchsten Ladung im Verbraucher-Zählpfeilsystem negativ - das heißt, von dieser Phase wird Wirkleistung geliefert. Die Stromkomponente $I_{d0}$ ist negativ.

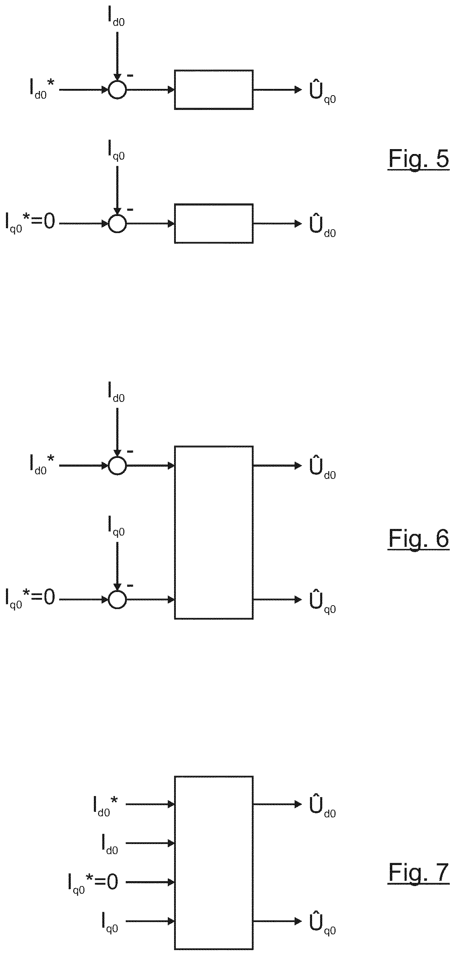

Zur Festlegung des Nullsystemstroms kann eines oder können mehrere Regelungsverfahren eingesetzt werden, wobei als Stellgröße die Nullsystemspannung, als Führungsgröße ein Sollwert des Nullsystemstroms und als Regelgröße der erfasste Istwert des Nullsystemstroms verwendet werden. Die Regelung kann beispielsweise wie in Figur 4 oder 5 dargestellt realisiert werden. In den Figuren entspricht $I_{d0}{}^*$ dem Sollwert für die d-Stromkomponente $I_{d0}$ und $I_{q0}{}^*$ dem Sollwert für die q-Stromkomponente $I_{q0}$.

Die q-Komponente $I_{q0}$ des Nullsystemstroms soll zur Vermeidung von Blindleistungsverlusten vorzugsweise auf null geregelt werden. Ein Sollwert einer d-Komponente des Nullsystemstroms kann ferner unter Berücksichtigung eines Ladungsunterschieds zwischen den Gleichspannungsquellen 3 der Gleichspannungsstränge 5 festgelegt werden, vorzugsweise gemäß einem proportionalen Zusammenhang zu dem Ladungsunterschied.

Die zu verwendende Regelungsstruktur kann vorzugsweise in Abhängigkeit vom Verhältnis zwischen Widerstand und Reaktanz der Phase L1, L2, L3 gewählt werden. Ist der Widerstand R größer oder gleich der Reaktanz X, kann die Regelung gemäß Figur 4 vorteilhafter sein. Umgekehrt kann die Regelung gemäß Figur 5 vorteilhafter sein, wenn die Reaktanz X größer ist als der Widerstand R. In einem Batteriespeicher ist der Widerstand R durch die hohen ohmschen Innenwinderstände der Batteriezellen 3 in der Regel (viel) größer als die Reaktanz X, so dass R/X > 1 und die Regelung gemäß Figur 4 bevorzugt ist.

Weitere Alternativen für die Regelung sind allerdings auch möglich, wie z. B. die Zustandsregelung gemäß Figur 6 oder eine Regelung, wie in Figur 7 angedeutet.

## Patentansprüche

1. Verfahren zur Erzeugung eines Mehrphasenwechselstroms, insbesondere eines Dreiphasenwechselstroms, durch Verschalten einer Mehrzahl von Gleichspannungsquellen (3), aufweisend zumindest die folgenden Verfahrensschritte:

- Bereitstellen eines konfigurierbaren Gleichspannungsstrangs (5) für jede Phase (L1, L2, L3) des Mehrphasenwechselstroms, wobei jeder konfigurierbare Gleichspannungsstrang (5) aus einer Mehrzahl der Gleichspannungsquellen (3) ausgebildet wird, die in einer konfigurierbaren Reihenschaltung miteinander verschaltbar sind;

- Anordnen der konfigurierbaren Gleichspannungsstränge (5) in einer Polygonschaltung, insbesondere in einer Dreieckschaltung;

- Konfigurieren der konfigurierbaren Gleichspannungsstränge (5), so dass der Mehrphasenwechselstrom bereitgestellt wird und außerdem ein Nullsystemstrom für einen Ladungsausgleich zwischen den konfigurierbaren Gleichspannungssträngen (5) ausgebildet wird,

**gekennzeichnet durch**

zumindest den folgenden weiteren Verfahrensschritt:

- Bereitstellen eines Sternpunktbildners (10) zur Realisierung eines gemeinsamen Sternpunktes (N) aller konfigurierbaren Gleichspannungsstränge (5),

wobei eine q-Komponente des Nullsystemstroms minimiert wird und/oder ein Sollwert einer d-Komponente des Nullsystemstroms unter Berücksichtigung eines Ladungsunterschieds zwischen den Gleichspannungsquellen (3) der Gleichspannungsstränge (5) festgelegt wird.

2. Verfahren nach Anspruch 1,
**dadurch gekennzeichnet, dass**
durch entsprechende Konfiguration der Verschaltung der einzelnen Gleichspannungsquellen (3) der jeweiligen konfigurierbaren Gleichspannungsstränge (5) ein symmetrischer Dreiphasenwechselstrom bereitgestellt wird, wobei für die Wechselspannungen der einzelnen Phasen die folgenden Zusammenhänge gelten:

$$u_{L1}(t) = \widehat{U} \cdot \cos\left(2 \cdot \pi \cdot f \cdot t\right)$$

$$u_{L2}(t) = \widehat{U} \cdot \cos\left(2 \cdot \pi \cdot f \cdot t - 120°\right)$$

$$u_{L3}(t) = \widehat{U} \cdot \cos\left(2 \cdot \pi \cdot f \cdot t - 240°\right)$$

**mit dem Spitzenwert** $\hat{U}$ und der Netzfrequenz *f*.

3. Verfahren nach Anspruch 1 oder 2,
**dadurch gekennzeichnet, dass**
der Nullsystemstrom in jedem der konfigurierbaren Gleichspannungsstränge (5) in Amplitude und Phase identisch ist.

4. Verfahren nach einem der Ansprüche 1 bis 3,
**dadurch gekennzeichnet, dass**

durch entsprechende Konfiguration der Verschaltung der einzelnen Gleichspannungsquellen (3) der jeweiligen konfigurierbaren Gleichspannungsstränge (5) zur Ausbildung des Nullsystemstroms jeweils eine Nullsystemspannung gemäß

$$u_0(t) = \widehat{U}_0 \cdot \cos\left(2 \cdot \pi \cdot f \cdot t + \varphi_0\right)$$

zu den Wechselspannungen ($u_{L1}(t)$, $u_{L2}(t)$, $u_{L3}(t)$) der einzelnen Phasen (L1, L2, L3) addiert wird, mit der Amplitude $\hat{U}_0$ und dem Phasenwinkel $\varphi_0$ der Nullsystemspannung.

5. Verfahren nach Anspruch 4,
**dadurch gekennzeichnet, dass**

eines oder mehrere Regelungsverfahren zur Festlegung des Nullsystemstroms eingesetzt werden, wobei als Stellgröße die Nullsystemspannung, als Führungsgröße ein Sollwert des Nullsystemstroms und als Regelgröße der erfasste Istwert des Nullsystemstroms verwendet werden.

6. Verfahren nach einem der Ansprüche 1 bis 5,
**dadurch gekennzeichnet, dass** die q-Komponente des Nullsystemstroms auf null geregelt wird.

7. Verfahren nach einem der Ansprüche 1 bis 6,
**dadurch gekennzeichnet, dass**
der Sollwert der d-Komponente des Nullsystemstroms gemäß einem proportionalen Zusammenhang zu dem Ladungsunterschied zwischen den Gleichspannungsquellen (3) der Gleichspannungsstränge (5) festgelegt wird.

8. Computerprogramm, umfassend Steuerbefehle, die bei der Ausführung des Programms durch eine Steuereinrichtung (4) diese veranlassen, das Verfahren gemäß einem der Ansprüche 1 bis 7 auszuführen.

9. Schaltungsanordnung (2) zur Erzeugung eines Mehrphasenwechselstroms, insbesondere eines Dreiphasenwechselstroms, aus einer Mehrzahl von Gleichspannungsquellen (3), aufweisend

- einen konfigurierbaren Gleichspannungsstrang (5) für jede Phase (L1, L2, L3) des Mehrphasenwechselstroms, wobei jeder konfigurierbare Gleichspannungsstrang (5) eingerichtet ist, eine Mehrzahl mit dem konfigurierbaren Gleichspannungsstrang (5) verbindbare Gleichspannungsquellen (3) in einer konfigurierbaren Reihenschaltung miteinander zu verschalten, und wobei die konfigurierbaren Gleichspannungsstränge (5) in einer Polygonschaltung angeordnet sind, insbesondere in einer Dreieckschaltung; und
- eine Steuereinrichtung (4) die eingerichtet ist, die konfigurierbaren Gleichspannungsstränge (5) so zu konfigurieren, dass der Mehrphasenwechselstrom bereitgestellt und außerdem ein Nullsystemstrom für einen Ladungsausgleich zwischen den konfigurierbaren Gleichspannungssträngen (5) ausgebildet wird,

**gekennzeichnet durch**
einen Sternpunktbildner (10) zur Realisierung eines gemeinsamen Sternpunktes (N) aller konfigurierbaren Gleichspannungsstränge (5), wobei die Steuereinrichtung eingerichtet ist, eine q-Komponente des Nullsystemstroms zu minimieren und/oder einen Sollwert einer d-Komponente des Nullsystemstroms unter Berücksichtigung eines Ladungsunterschieds zwischen den Gleichspannungsquellen (3) der Gleichspannungsstränge (5) festzulegen.

10. Schaltungsanordnung (2) nach Anspruch 9,
**dadurch gekennzeichnet, dass**
jeder der konfigurierbaren Gleichspannungsstränge (5) eine ausgangsseitige Schnittstelle (6) zur Bereitstellung der erzeugten Wechselspannung ($u_{L1}(t)$, $u_{L2}(t)$, $u_{L3}(t)$) aufweist, sowie eine Kaskade aus mehreren Wechselrichtereinheiten (7), die gemeinsam die Wechselspannung ($u_{L1}(t)$, $u_{L2}(t)$, $u_{L3}(t)$) an der ausgangsseitigen Schnittstelle (6) bereitzustellen vermögen, wobei jede der Wechselrichtereinheiten (7) eingerichtet ist, zumindest eine mit der jeweiligen Wechselrichtereinheit (7) verbindbare Gleichspannungsquelle (3) in die Erzeugung der Wechselspannung ($u_{L1}(t)$, $u_{L2}(t)$, $u_{L3}(t)$) einzubeziehen oder von der Erzeugung der Wechselspannung ($u_{L1}(t)$, $u_{L2}(t)$, $u_{L3}(t)$) auszuschließen.

11. Schaltungsanordnung (2) nach Anspruch 10,
**dadurch gekennzeichnet, dass**
die Wechselrichtereinheiten (7) jeweils eine H-Brückenschaltung aus vier konfigurierbaren leistungselektronischen Schaltelementen (8) aufweisen.

12. Schaltungsanordnung (2) nach einem der Ansprüche 9 bis 11,
**dadurch gekennzeichnet, dass**
der Sternpunktbildner (10) einen Transformator mit Stern-Dreieck-Schaltung oder Zickzackschaltung aufweist.

13. Schaltungsanordnung (2) nach einem der Ansprüche 9 bis 12,
**dadurch gekennzeichnet, dass**
der Sternpunktbildner (10) für eine Maximalbelastung ausgelegt ist, die kleiner ist als 10 kW, vorzugsweise kleiner ist als 8 kW, besonders bevorzugt kleiner ist als 5 kW.

14. Energieversorgungssystem (1), aufweisend eine Schaltungsanordnung (2) gemäß einem der Ansprüche 9 bis 13 und die Gleichspannungsquellen (3), wobei die Gleichspannungsquellen (3) mit den entsprechenden konfigurierbaren Gleichspannungssträngen (5) verbunden sind.

15. Energieversorgungssystem (1) nach Anspruch 14,
    **dadurch gekennzeichnet, dass**
    die Gleichspannungsquellen (3) als Batteriezellen einer Batterie ausgebildet sind.

**Claims**

1. Method for generating a polyphase alternating current, in particular a three-phase alternating current, by interconnecting a plurality of DC voltage sources (3), having at least the following method steps:

   - providing a configurable DC voltage string (5) for each phase (L1, L2, L3) of the polyphase alternating current, wherein each configurable DC voltage string (5) is formed from a plurality of the DC voltage sources (3) which can be interconnected in a configurable series circuit;
   - arranging the configurable DC voltage strings (5) in a polygon circuit, in particular in a delta circuit;
   - configuring the configurable DC voltage strings (5) such that the polyphase alternating current is provided and a zero phase-sequence system current is also formed for charge equalization between the configurable DC voltage strings (5),

   **characterized by**

   at least the following further process step:

   - providing a neutral grounding transformer (10) for the purpose of achieving a common neutral point (N) of all configurable DC voltage strings (5),

   wherein a q component of the zero phase-sequence system current is minimized and/or a target value of a d component of the zero phase-sequence system current is determined taking into account a charge difference between the DC voltage sources (3) of the DC voltage strings (5).

2. Method according to Claim 1,
   **characterized in that**
   a symmetrical three-phase alternating current is provided by appropriately configuring the interconnection of the individual DC voltage sources (3) of the respective configurable DC voltage strings (5), wherein the following relationships apply to the AC voltages of the individual phases:

   $$u_{L1}(t) = \widehat{U} \cdot \cos\left(2 \cdot \pi \cdot f \cdot t\right)$$

   $$u_{L2}(t) = \widehat{U} \cdot \cos\left(2 \cdot \pi \cdot f \cdot t - 120°\right)$$

   $$u_{L3}(t) = \widehat{U} \cdot \cos\left(2 \cdot \pi \cdot f \cdot t - 240°\right)$$

   with the peak value $\widehat{U}$ and the network frequency $f$.

3. Method according to Claim 1 or 2,
   **characterized in that**
   the zero phase-sequence system current in each of the configurable DC voltage strings (5) is identical in terms of amplitude and phase.

4. Method according to any one of Claims 1 to 3,
   **characterized in that**
   by appropriately configuring the interconnection of the individual DC voltage sources (3) of the respective configurable DC voltage strings (5) for the formation of the zero phase-sequence system current, a zero phase-sequence system voltage according to

$$u_0(t) = \hat{U}_0 \cdot \cos\left(2 \cdot \pi \cdot f \cdot t + \varphi_0\right)$$

is added to the AC voltages ($u_{L1}(t)$, $u_{L2}(t)$, $u_{L3}(t)$) of the individual phases (L1, L2, L3), with the amplitude $\hat{U}_0$ and the phase angle $\varphi_0$ of the zero phase-sequence system voltage.

5. Method according to Claim 4,
   **characterized in that**
   one or more closed-loop control methods are used to determine the zero phase-sequence system current, wherein the zero phase-sequence system voltage is used as the manipulated variable, a target value of the zero phase-sequence system current is used as the reference variable and the captured actual value of the zero phase-sequence system current is used as the closed-loop control variable.

6. Method according to any one of Claims 1 to 5,
   **characterized in that**
   the q component of the zero phase-sequence system current is controlled to zero in a closed-loop manner.

7. Method according to any one of Claims 1 to 6,
   **characterized in that**
   the target value of the d component of the zero phase-sequence system current is determined according to a proportional relationship to the charge difference between the DC voltage sources (3) of the DC voltage strings (5).

8. Computer program comprising control instructions which, when the program is executed by an open-loop control device (4), cause this to carry out the method according to any one of Claims 1 to 7.

9. Circuit arrangement (2) for generating a polyphase alternating current, in particular a three-phase alternating current, from a plurality of DC voltage sources (3), having

   - a configurable DC voltage string (5) for each phase (L1, L2, L3) of the polyphase alternating current, wherein each configurable DC voltage string (5) is configured to interconnect a plurality of DC voltage sources (3), which can be connected to the configurable DC voltage string (5), in a configurable series circuit, and wherein the configurable DC voltage strings (5) are arranged in a polygon circuit, in particular in a delta circuit; and
   - an open-loop control device (4) which is configured to configure the configurable DC voltage strings (5) such that the polyphase alternating current is provided and a zero phase-sequence system current is also formed for charge equalization between the configurable DC voltage strings (5),

   **characterized by**
   a neutral grounding transformer (10) for achieving a common neutral point (N) of all configurable DC voltage strings (5), wherein the open-loop control device (4) is configured to minimize a q component of the zero phase-sequence system current and/or to determine a target value of a d component of the zero phase-sequence system current taking into account a charge difference between the DC voltage sources (3) of the DC voltage strings (5).

10. Circuit arrangement (2) according to Claim 9,
    **characterized in that**
    each of the configurable DC voltage strings (5) has an output-side interface (6) for providing the generated AC voltage ($u_{L1}(t)$, $u_{L2}(t)$, $u_{L3}(t)$), and a cascade of a plurality of inverter units (7) which together can provide the AC voltage ($u_{L1}(t)$, $u_{L2}(t)$, $u_{L3}(t)$) at the output-side interface (6), wherein each of the inverter units (7) is configured to include at least one DC voltage source (3), which can be connected to the respective inverter unit (7), in the generation of the AC voltage ($u_{L1}(t)$, $u_{L2}(t)$, $u_{L3}(t)$) or to exclude it from the generation of the AC voltage ($u_{L1}(t)$, $u_{L2}(t)$, $u_{L3}(t)$).

11. Circuit arrangement (2) according to Claim 10,
    **characterized in that**
    the inverter units (7) each have an H-bridge circuit consisting of four configurable power electronic switching elements (8).

12. Circuit arrangement (2) according to any one of Claims 9 to 11,
    **characterized in that**
    the neutral grounding transformer (10) has a transformer with a star-delta or zigzag circuit.

**13.** Circuit arrangement (2) according to any one of Claims 9 to 12,
**characterized in that**
the neutral grounding transformer (10) is designed for a maximum load that is less than 10 kW, preferably less than 8 kW, particularly preferably less than 5 kW.

**14.** Energy supply system (1) having a circuit arrangement (2) according to any one of Claims 9 to 13 and the DC voltage sources (3), wherein the DC voltage sources (3) are connected to the corresponding configurable DC voltage strings (5).

**15.** Energy supply system (1) according to Claim 14,
**characterized in that**
the DC voltage sources (3) are designed as battery cells of a battery.

**Revendications**

**1.** Procédé destiné à produire un courant alternatif polyphasé, en particulier un courant alternatif triphasé, par connexion d'une pluralité de sources de tension continue (3), présentant au moins les étapes de procédé suivantes :

- fournir une chaîne de tension continue configurable (5) pour chaque phase (L1, L2, L3) du courant alternatif polyphasé, dans lequel chaque chaîne de tension continue configurable (5) est formée d'une pluralité de sources de tension continue (3) qui peuvent être interconnectées les unes aux autres dans un couplage en série configurable ;
- disposer les chaînes de tension continue configurables (5) dans un couplage polygonal, en particulier dans un couplage en triangle ;
- configurer les chaînes de tension continue configurables (5) de telle sorte que le courant alternatif polyphasé soit fourni et en outre qu'un courant de séquence à zéro soit formé pour une égalisation de charge entre les chaînes de tension continue configurables (5),

**caractérisé par**
au moins l'autre étape de procédé suivante :

- fournir un transformateur de point neutre (10) pour réaliser un point neutre commun (N) de toutes les chaînes de tension continue configurables (5), dans lequel une composante q du courant de séquence à zéro est minimisée et/ou une valeur de consigne d'une composante d du courant de séquence à zéro est fixée en tenant compte d'une différence de charge entre les sources de tension continue (3) des chaînes de tension continue configurables (5).

**2.** Procédé selon la revendication 1, **caractérisé en ce que** la configuration correspondante de l'interconnexion des sources de tension continue individuelles (3) des chaînes de tension continue configurables respectives (5) permet de fournir un courant alternatif triphasé symétrique, dans lequel pour les tensions alternatives des phases individuelles les relations suivantes s'appliquent :

$$u_{L1}(t) = \hat{U} \cdot \cos\left(2 \cdot \pi \cdot f \cdot t\right)$$

$$u_{L2}(t) = \hat{U} \cdot \cos\left(2 \cdot \pi \cdot f \cdot t - 120°\right)$$

$$u_{L3}(t) = \hat{U} \cdot \cos\left(2 \cdot \pi \cdot f \cdot t - 240°\right)$$

avec la valeur de crête $\hat{U}$ et la fréquence réseau $f$.

**3.** Procédé selon la revendication 1 ou 2, **caractérisé en ce que** le courant de séquence à zéro dans chacune des chaînes de tension continue configurables (5) est identique en amplitude et en phase.

**4.** Procédé selon l'une des revendications 1 à 3, **caractérisé en ce que** la configuration correspondante de l'interconnexion des sources de tension continue individuelles (3) des chaînes de tension continue configurables respectives (5) pour former le courant de séquence à zéro permet d'ajouter à chaque fois une tension de séquence à zéro conformément à

$$u_0(t) = \hat{U}_0 \cdot \cos\left(2 \cdot \pi \cdot f \cdot t \cdot \varphi_0\right)$$

aux tensions alternatives ($u_{L1}(t)$, $u_{L2}(t)$, $u_{L3}(t)$) des phases individuelles (L1, L2, L3), avec l'amplitude $\hat{U}_0$ et l'angle de phase $\varphi_0$ de la tension de séquence à zéro.

**5.** Procédé selon la revendication 4, **caractérisé en ce qu'**une ou plusieurs procédures de régulation sont utilisées pour fixer le courant de séquence à zéro, dans lequel sont utilisées comme grandeur de commande la tension de séquence à zéro, comme grandeur de guidage une valeur de consigne du courant de séquence à zéro et comme grandeur de régulation la valeur réelle enregistrée du courant de séquence à zéro.

**6.** Procédé selon l'une des revendications 1 à 5, **caractérisé en ce que** la composante q du courant de séquence à zéro est réglée de manière minimisée sur zéro.

**7.** Procédé selon l'une des revendications 1 à 6, **caractérisé en ce que** la valeur de consigne de la composante d du courant de séquence à zéro est fixée selon une relation proportionnelle à la différence de charge entre les sources de tension continue (3) des chaînes de tension continue configurables (5).

**8.** Programme d'ordinateur, comprenant des ordres de commande qui, lors de la réalisation du programme par un dispositif de commande (4), amènent celui-ci à réaliser le procédé selon l'une des revendications 1 à 7.

**9.** Circuit (2) destiné à produire un courant alternatif polyphasé, en particulier un courant alternatif triphasé, à partir d'une pluralité de sources de tension continue (3), présentant

- une chaîne de tension continue configurable (5) pour chaque phase (L1, L2, L3) du courant alternatif polyphasé, dans lequel chaque chaîne de tension continue configurable (5) est installée pour interconnecter les unes aux autres dans un couplage en série configurable une pluralité de sources de tension continue (3) qui peuvent être reliées à la chaîne de tension continue configurable (5) et dans lequel les chaînes de tension continue configurables (5) sont disposées dans un couplage polygonal, en particulier dans un couplage en triangle ; et
- un dispositif de commande (4) qui est installée pour configurer les chaînes de tension continue configurables (5) de telle sorte que le courant alternatif polyphasé soit fourni et en outre qu'un courant de séquence à zéro pour une égalisation de charge soit formé entre les chaînes de tension continue configurables (5),
**caractérisé par**
- un transformateur de point neutre (10) pour réaliser un point neutre commun (N) de toutes les chaînes de tension continue configurables (5), dans lequel le dispositif de commande est installé pour minimiser la composante q du courant de séquence à zéro et/ou fixer une valeur de consigne d'une composante d du courant de séquence à zéro en tenant compte d'une différence de charge entre les sources de tension continue (3) des chaînes de tension continue configurables (5).

**10.** Circuit (2) selon la revendication 9, **caractérisé en ce que** chacune des chaînes de tension continue configurables (5) présente une interface côté sortie (6) pour fournir la tension alternative produite ($u_{L1}(t)$, $u_{L2}(t)$, $u_{L3}(t)$), ainsi qu'une cascade de plusieurs unités d'onduleurs (7), qui peuvent fournir conjointement la tension alternative ($u_{L1}(t)$, $u_{L2}(t)$, $u_{L3}(t)$) à l'interface côté sortie (6), dans lequel chacune des unités d'onduleurs (7) est installée pour intégrer dans la production de la tension alternative ($u_{L1}(t)$, $u_{L2}(t)$, $u_{L3}(t)$) au moins une source de tension continue (3), qui peut être reliée à l'unité d'onduleur respective (7), ou l'exclure de la production de la tension alternative ($u_{L1}(t)$, $u_{L2}(t)$, $u_{L3}(t)$).

**11.** Circuit (2) selon la revendication 10, **caractérisé en ce que** les unités d'onduleurs (7) présentent à chaque fois un couplage en pont en H composé de quatre éléments de commutation électroniques de puissance configurables (8).

**12.** Circuit (2) selon l'une des revendications 9 à 11, **caractérisé en ce que** le transformateur de point neutre (10) présente un transformateur avec un couplage étoile-triangle ou un couplage en zigzag.

**13.** Circuit (2) selon l'une des revendications 9 à 12, **caractérisé en ce que** le transformateur de point neutre (10) est dimensionné pour une charge maximale inférieure à 10 kW, de préférence inférieure à 8 kW, particulièrement préférée inférieure à 5 kW.

14. Système d'alimentation en énergie (1), présentant un circuit (2) selon l'une des revendications 9 à 13 et les sources de tension continue (3), dans lequel les sources de tension continue (3) sont reliées aux chaînes de tension continue configurables (5) correspondantes.

15. Système d'alimentation en énergie (1) selon la revendication 14, **caractérisé en ce que** les sources de tension continue (3) sont conçues sous la forme de cellules de batterie d'une batterie.

EP 4 462 629 B1

Fig. 1

19

Fig. 2

Fig. 3

Fig. 4

$I_{d0}$

$I_{d0}*$ → ⊖⁻ → [ ] → $\hat{U}_{q0}$

$I_{q0}$

$I_{q0}*=0$ → ⊖⁻ → [ ] → $\hat{U}_{d0}$

Fig. 5

$I_{d0}$

$I_{d0}*$ → ⊖⁻ → [ ] → $\hat{U}_{d0}$

$I_{q0}$

$I_{q0}*=0$ → ⊖⁻ → [ ] → $\hat{U}_{q0}$

Fig. 6

$I_{d0}*$ → [ ] → $\hat{U}_{d0}$
$I_{d0}$ →
$I_{q0}*=0$ →
$I_{q0}$ → → $\hat{U}_{q0}$

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011004248 A1
- DE 102011086545 A1
- CN 114447970 A
- DE 102018003642 A1

**In der Beschreibung aufgeführte Nicht-Patentliteratur**

- Review of Battery Cell Balancing Techniques. **J. QI** ; **D. LU**. Australasian Universities Power Engineering Conference, AUPEC. Curtin University, 28 September 2014